# EUROPEAN PATENT SPECIFICATION

(11) **EP 2 420 668 B1**
(45) Date of publication and mention of the grant of the patent: **17.09.2014**
(21) Application number: 11382256.3
(22) Date of filing: 27.07.2011
(51) Int. Cl.: F03B 13/00, F03B 17/06, F03B 11/00, F03B 13/06, F03B 13/10, F03B 15/04

(54) **Turbo-generator device for generating energy in aquifer recharge and process associated therewith**
Turbogeneratorvorrichtung zur Erzeugung von Energie bei der Grundwasserleiteraufladung und zugehöriges Verfahren
Dispositif turbogénérateur pour générer de l'énergie dans une alimentation de formation aquifère et procédé correspondant

(30) Priority: 17.08.2010 ES 201031262
(43) Date of publication of application: 22.02.2012
(73) Proprietor: Perga Ingenieros, S.L., 30850 Totana Murcia (ES)
(72) Inventor: Perez Martinez, José María, 30850 Totana (Murcia) (ES); Perez Garcia, José Miguel, 30850 Totana (Murcia) (ES); Perez Garcia, Mario, 30850 Totana (Murcia) (ES)
(74) Representative: Carpintero Lopez, Francisco

(56) References cited:
- US-A- 4 248 305
- US-A- 5 839 508
- US-A1- 2009 121 481

## Description

### Technical Field of the Invention

As indicated by the title of the present specification, the invention relates to a turbo-generator device for generating energy in aquifer recharge as well as the process associated therewith, providing notable advantages and novelty features compared to other similar currently known devices, mechanisms and systems on the market.

More particularly, the object of the invention is aimed at a process for generating energy in aquifer recharge as well as the turbo-generator device associated therewith such that it allows generating energy when recharging an aquifer by means of a simple and easy to operate and automate process, additionally having a highly reliable device comprising simple and easy to maintain elements.

The field of application of the present invention falls within the technical sector of the industry dedicated to artificial aquifer recharge and hydrogeology.

### Background of the Invention

Currently, and as a reference to the state of the art, it should be pointed out that even though multiple turbo-generator devices of the type herein described exist on the market, the applicant is unaware of the existence of any other invention having the technical, structural and constitutive features of the invention herein proposed.

The working of a hydraulic machine, the purpose of which is to pump or apply a turbine to a fluid, is well known;
- the purpose of the pumping process is to increase the pressure of a liquid adding energy to the hydraulic system, for moving the fluid from an area of less pressure or altitude to another area of greater pressure or altitude,
- in contrast, the process for applying a turbine to a fluid relates to the continuous flow of a fluid through the hydraulic machine and the fluid delivers its energy through a runner with blades or vanes.

Different applications relating to hydraulic turbo-generator devices are known, such as patent application publication number WO-2009141644-A2, which discloses a turbo-generator device comprising a cylindrical outer casing wherein a turbine coupled to an electric generator is internally described, such that it allows generating electric energy due to the rotational movement of the turbine coupled to said generator; but when dealing with the artificial aquifer recharge, there are drawbacks such as the complexity of not introducing air into the aquifer itself, such that the pressure increases and leaks or cracks could exist in the device itself, as well as the difficulty of being able to control the device from outside due to the depth at which the device in question can be located.

And in a manner similar to the application mentioned above, application CN-101530832 discloses a light energy turbo-generator device for small installations comprising a small size as is desirable in aquifer recharge devices but it has the same drawbacks described above in terms of being able to prevent overpressures and having an easy external control.

Patent application publication number WO-2009113656 also discloses a turbo-generator device aimed at domestic installations comprising a cylindrical casing and a hydraulic turbine is located therein, to which there is coupled, outside the casing, an electric energy generating motor, wherein said patent application has the same drawbacks mentioned above and relating to artificial aquifer recharge.

It is therefore observed that there are several drawbacks relating mainly to the use of turbo-generator devices of this type for artificial aquifer recharge since the main focus of the mentioned background documents relates to small-sized machines which are unable to prevent the existence of overpressures in an application as specific as aquifer recharge, as well as the inability of having a control system of said device allowing the user to control it, said device generally being located at a great depth.

Finally, the patent application US2009/0121481A1 relates to the use of aquifer fluid in connection with domestic or industrial applications, wherein the kinetic energy of the returning fluid is converted into electrical energy. On the other hand, the patent application US5839508A relates to an apparatus and method for providing electrical power to electrical circuits located in a well.

### Description of the Invention

The process for generating energy in aquifer recharge as well as the turbo-generator device associated therewith proposed by the invention fully and satisfactorily solves the problems set forth above such that it simplifies the control capacity of the turbo-generator device from outside by a user; it further prevents the appearance of air bubbles in the aquifer as a result of the elements forming it, as well as allowing both the recharge and the extraction of existing fluid in the aquifer itself. All of this is done with a highly reliable device comprising simple and easy to maintain elements.

Specifically, the turbo-generator device for generating energy in aquifer recharge proposed by the invention consists of a turbo-generator device comprising at least one cylindrical tube open at its ends internally comprising:
at least one hydraulic turbine coupled to at least one submersible asynchronous motor,
and wherein additionally at least one valve is coupled to one of the ends of said at least one cylindrical tube which allows opening/shutting off the fluid flow through said at least one cylindrical tube, and
wherein said at least one valve can be operated by a user through operating means which can be controlled from outside said device.

It is therefore observed that the device is submerged in the aquifer itself and that said at least one valve is located at one of the ends of the device allowing the outlet of fluid for the correct recharge, such that the valve prevents the sudden inlet of fluid in the aquifer, which could lead to the inclusion of air bubbles and cause an overpressure in the aquifer itself.

The bubbles which can be introduced in the aquifer are generally produced when introducing fluid from great heights since the fluid impacts against the bottom, where the turbo-generator device is located, and turbulences are produced, generating air bubbles, with the drawback of being able to be introduced in the aquifer and increasing the internal pressure thereof until possibly causing the introduced turbo-generator device to burst.

Since there is at least one hydraulic turbine coupled to at least one submersible asynchronous motor, the fluid flow therethrough generates electricity that can be harnessed for various similar or different uses; and in the event of requiring an extraction of fluid from the aquifer itself, said at least one submersible asynchronous motor supplies electric energy to said at least one hydraulic turbine such that it behaves like a fluid drive pump.

As described, said at least one asynchronous motor is submersible, being able to come into contact with the fluid and simplifying the construction of the entire turbo-generator device.

It is additionally observed how said at least one valve comprises operating means which can be controlled from outside and can therefore be operated from outside by a user, without needing to have complex regulating mechanisms and being able to be completely automated.

Said valve could be connected to a pressure gauge such that the pressure inside the tube is known at all times and the fluid flow into the aquifer is allowed or blocked.

In this sense, the invention contemplates the possibility that said at least one valve is pneumatic and comprises
an inflatable/deflatable gas volume coupled to a tube, wherein
said operating means comprise a gas tank coupled to said tube, and wherein said operating means are located outside with respect to said device without producing significant charge losses when operating said at least one valve.

In this possibility a pneumatic valve comprising an inflatable volume which allows or impedes the fluid flow in a certain direction is used, such that gas can be introduced or extracted from regulating at least one gas tank located outside, it therefore being a simple but highly effective regulation since the tube is of a reduced diameter and the charge losses experienced throughout are minimal, therefore having a very precise regulation that can be controlled from outside.

In addition, the possibility of the turbo-generator device for generating energy in aquifer recharge comprising at least one cylindrical chamber enveloping said at least one cylindrical tube is contemplated, wherein said at least one cylindrical chamber comprises a plurality of openings.

And said at least one cylindrical chamber enveloping said at least one cylindrical tube comprises a plurality of openings through which the fluid circulates such that it can house the still or moving fluid in the circular ring comprised between the cylindrical tube and said chamber, and prevents the contact of solids or foreign elements with said at least one cylindrical tube which could damage it.

The possibility of said at least one cylindrical tube being comprised between 200 and 600 mm is contemplated, such that the size of the device is very reduced, and therefore the inclusion of said turbo-generator device in the corresponding cavity of the aquifer is carried out in a simple manner since it does not require a high excavation volume.

The size also implies that the outer surface of the turbo-generator device has a reduced dimension and better withstands the pressure existing outside said device, improving its reliability and reducing the time between maintenance tasks.

Optionally, said at least one asynchronous motor externally comprises a plurality of cooling fins such that by being in contact with the fluid itself as it is a submersible asynchronous motor, the extraction of heat is facilitated by the fins in the motor itself.

The second aspect contemplated by the invention relates to a process for generating energy in aquifer recharge requiring at least one turbo-generator device comprising at least one cylindrical tube open at its ends internally comprising:
at least one hydraulic turbine coupled to at least one submersible asynchronous motor,
at least one valve coupled to one of the ends of said at least one cylindrical tube and comprising external operating means outside said at least one cylindrical tube, and
at least one cylindrical chamber enveloping said at least one cylindrical tube comprising a plurality of openings,
and in that the process allows:
   a) the flow of a fluid into the aquifer by means of operating said operating means associated with said at least one valve, wherein said fluid flow generates electric energy due to the movement of said at least one hydraulic turbine coupled to said at least one asynchronous motor,
   b) the fluid flow into said at least one cylindrical tube preventing the fluid flow into the aquifer by means of blocking said external operating means coupled to said at least one valve, and
   c) the fluid flow out of the aquifer by means of
operating said operating means associated with said at least one valve, allowing the inlet of fluid into said at least one turbo-generator device, and
operating said at least one asynchronous motor coupled to said at least one hydraulic turbine and acting as a fluid drive pump.

It therefore behaves like a reversible turbo-generator device for recharging and extracting fluid from aquifers, and allows acting like a backpressure valve at the fluid outlet, a pressure reducing valve aiding with its correct operation being able to be coupled in parallel.

The described process for generating energy in aquifer recharge as well as the turbo-generator device associated therewith represents an innovative structure having structural and constitutive features that have been unknown until now for such purpose. These reasons, combined with its practical use, provide it with sufficient foundation for obtaining the exclusive privilege that is requested.

### Description of the Drawings

To complement the description which is being made and for the purpose of aiding to better understand the features of the invention according to a preferred practical embodiment thereof, a set of drawings is attached as an integral part of said description in which the following has been depicted with an illustrative and non-limiting character:
Figure 1 shows a cross-section of the turbo-generator device proposed by the invention.

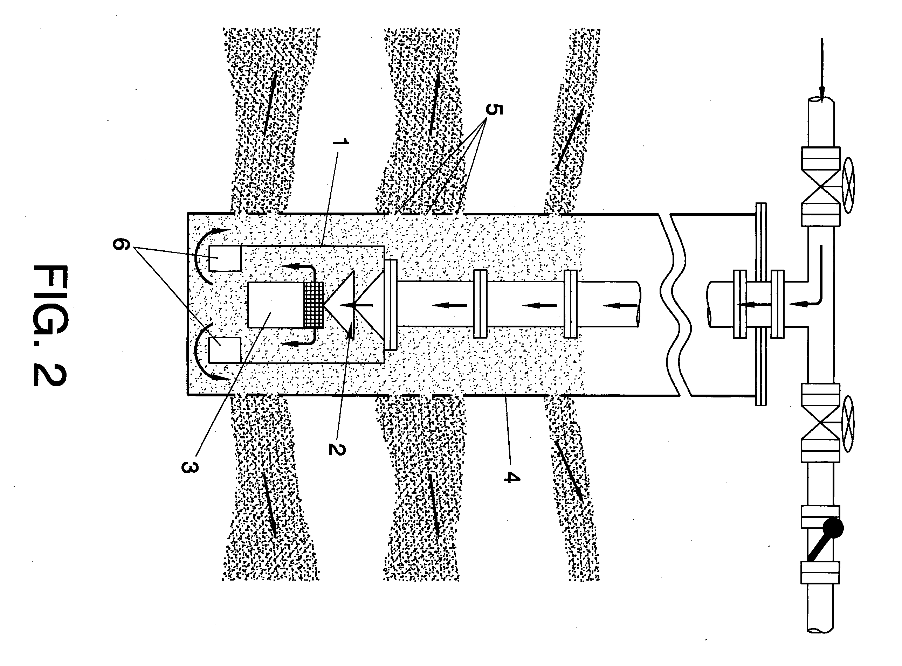

Figure 2 shows a diagram of the artificial aquifer recharge process with the valve allowing the fluid flow.

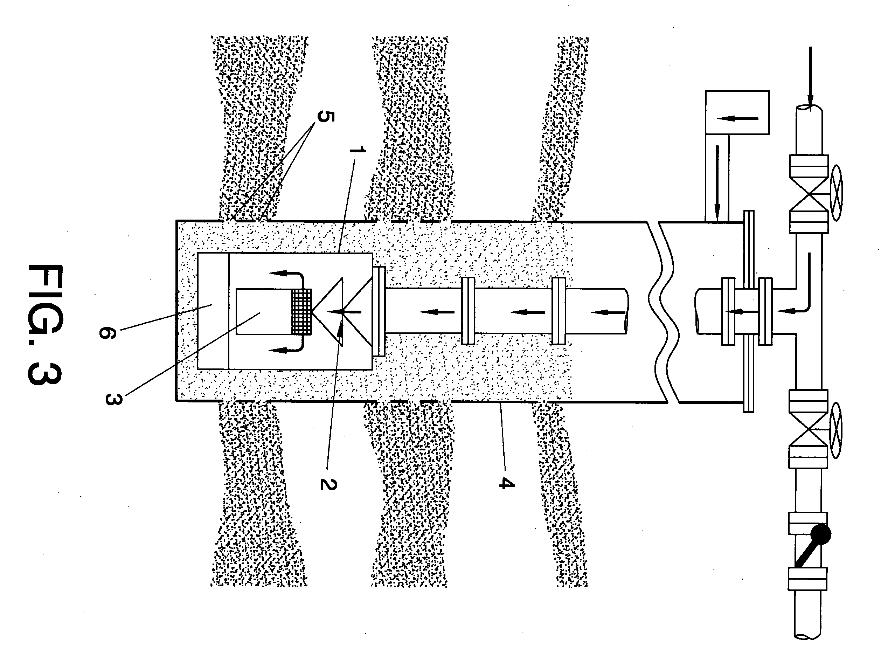

Figure 3 shows a diagram of the process in which the valve does not allow the fluid flow towards the aquifer.

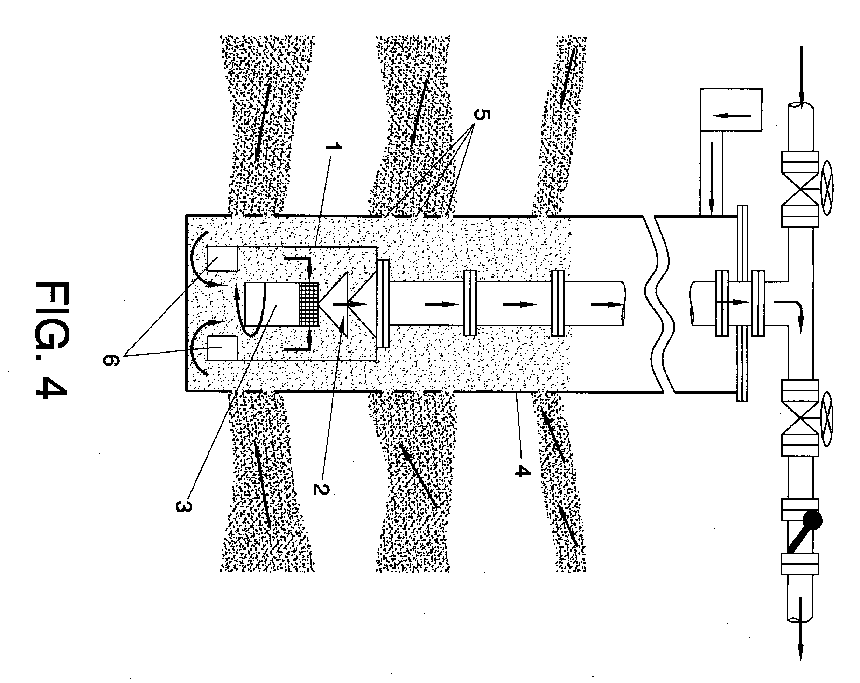

Figure 4 shows a diagram of the process of pumping out the fluid in the aquifer.

### Preferred Embodiment of the invention

In view of the mentioned figures and according to the reference numbers used, a preferred embodiment of the turbo-generator device for generating energy in aquifer recharge object of the invention can be observed in them, comprising the parts and elements indicated and described in detail below, the common parts and elements having been indicated with the same reference numbers.

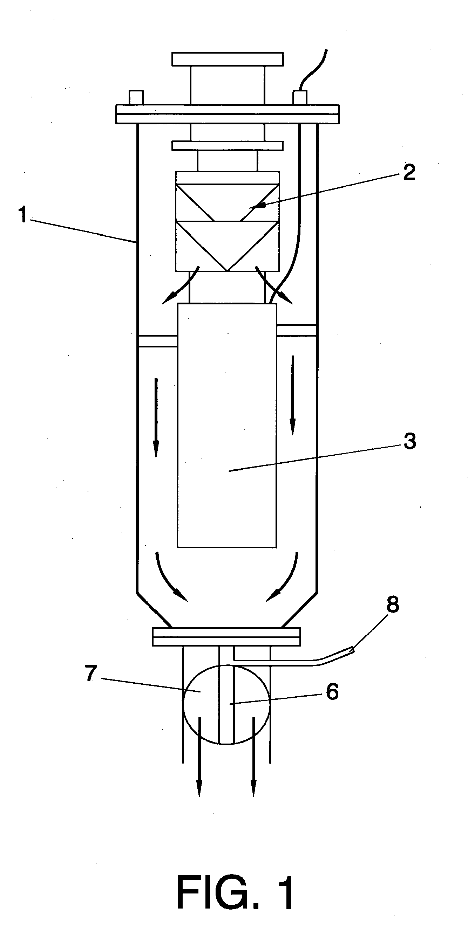

Thus, as seen in Figure 1, the turbo-generator device for generating energy in aquifer recharge comprises a cylindrical tube (1) open at its ends and 400 mm in diameter, internally comprising:
a hydraulic turbine (2) coupled to a submersible asynchronous motor (3),
wherein a valve (6) is coupled to one of the ends of said cylindrical tube (1), said valve (6) allows opening/shutting off the fluid flow through said cylindrical tube (1),
and wherein said valve (6) can be operated by a user through operating means which can be controlled from outside said device.

Specifically, said valve (6) is a pneumatic valve and comprises
an inflatable/deflatable gas volume (7) coupled to a tube (8) having a small diameter, wherein
said operating means additionally comprise a gas tank coupled to said tube (8), and wherein said operating means are located outside with respect to said device without producing significant charge losses when operating said valve (6), mainly due to the small diameter of the tube (8) communicating the volume (7) with the gas tank.

The turbo-generator device comprises a cylindrical chamber (4) enveloping said cylindrical tube (1), and wherein said cylindrical chamber (4) comprises a plurality of openings (5) through which the aquifer fluid circulates.

Lastly, the asynchronous motor (3) externally comprises a plurality of cooling fins thereby facilitating the extraction of the heat therein.

With respect to the process associated with the turbo-generator device for generating energy in aquifer recharge described in the preceding paragraphs, said process allows:
a) the flow of a fluid into the aquifer by means of operating said operating means associated with said valve (6), wherein the fluid flow generates electric energy due to the movement of the hydraulic turbine (2) coupled to said asynchronous motor (3),
b) the fluid flow into said cylindrical tube (1) preventing the fluid flow into the aquifer by means of blocking said external operating means coupled to said valve (6), and
c) the fluid flow out of the aquifer by means of:
   - operating said operating means associated with said valve (6), allowing the inlet of the fluid into said turbo-generator device object of the invention, and
   - operating said asynchronous motor (3) coupled to the hydraulic turbine (2) and acting as a fluid drive pump.

Having sufficiently described the nature as well as the manner of putting the present invention into practice, it is not considered necessary to expand the explanation for a person skilled in the art to understand its scope and the advantages derived from it, hereby stating that within its essential nature, it could be carried out to practice in other embodiments differing in detail from that indicated by way of example which will be equally covered by the protection obtained provided that its fundamental principle is not altered, changed or modified.

## Claims

1. Turbo-generator device for generating energy in aquifer recharge comprising at least one cylindrical tube (1) open at its ends internally comprising:
at least one hydraulic turbine (2),
at least one valve (6) which is coupled to one of the ends of said at least one cylindrical tube (1) and which allows opening/shutting off the fluid flow through said at least one cylindrical tube (1),
wherein said at least one valve (6) can be operated by a user through operating means which can be controlled from outside with respect to the location of said device,
**characterised in that** the turbo-generator device is submerged in the aquifer itself, wherein the at least one hydraulic turbine (2) is coupled to at least one submersible asynchronous motor (3), and wherein said turbo-generator device additionally comprises at least one cylindrical chamber (4) enveloping the at least one cylindrical tube (1), said at least one cylindrical chamber (4) comprising a plurality of openings (5) through which the aquifer fluid circulates.

2. Turbo-generator device according to the preceding claim, **characterised in that**
said at least one valve (6) is pneumatic and comprises
an inflatable/deflatable gas volume (7) coupled to at least one tube (8), wherein
said operating means comprise at least one gas tank coupled to said tube (8), and wherein said operating means are located outside with respect to said device without producing significant charge losses when operating said at least one valve (6).

3. Turbo-generator device according to any of the preceding claims, **characterised in that** the diameter of said at least one cylindrical tube (1) is comprised between 200 and 600 mm.

4. Turbo-generator device according to any of the preceding claims, **characterised in that** said at least one asynchronous motor (3) externally comprises a plurality of cooling fins.

5. Turbo-generator device according to claim 2, **characterised in that** said turbo-generator device is reversible for recharging and extracting fluid from aquifers, such that gas can be introduced or extracted from regulating the operating means.

6. Process for generating energy in aquifer recharge, **characterised in that** it requires at least one turbo-generator device comprising at least one cylindrical tube (1) open at its ends internally comprising:
at least one hydraulic turbine (2) coupled to at least one submersible asynchronous motor (1),
at least one valve (6) coupled to one of the ends of said at least one cylindrical tube (1) and comprising external operating means outside said at least one cylindrical tube (1),
and **in that** the process allows:
a) the flow of a fluid into the aquifer by means of operating said operating means associated with said at least one valve (6), wherein said fluid flow generates electric energy due to the movement of said at least one hydraulic turbine (2) coupled to said at least one asynchronous motor (3),
b) the fluid flow into said at least one cylindrical tube (1) preventing the fluid flow into the aquifer by means of blocking said external operating means coupled to said at least one valve (6), and
c) the fluid flow out of the aquifer by means of
operating said operating means associated with said at least one valve (6), allowing the inlet of fluid into said at least one turbo-generator device, and
operating said at least one asynchronous motor (3) coupled to said at least one hydraulic turbine (2) and acting as a fluid drive pump.

7. Process for generating energy in aquifer recharge, according to claim 6, **characterised in that** in the event of requiring an extraction of fluid from the aquifer itself, said at least one submersible asynchronous motor (3) supplies electric energy to said at least one hydraulic turbine (2) such that it behaves like a fluid drive pump.

## Patentansprüche

1. Turbogeneratorvorrichtung zum Erzeugen von Energie in einer Grundwasseranreicherung, umfassend zumindest ein zylindrisches Rohr (1), das an seinen Enden intern offen ist, umfassend:
zumindest eine hydraulische Turbine (2),
zumindest ein Ventil (6), das mit einem der Enden des zumindest einen zylindrischen Rohres (1) gekoppelt ist und das ein Öffnen/Absperren der Fluidströmung durch das zumindest eine zylindrische Rohr (1) zulässt,
wobei das zumindest eine Ventil (6) durch einen Nutzer über ein Betriebsmittel betätigt werden kann, das von außerhalb mit Bezug auf den Ort der Vorrichtung gesteuert werden kann,
**dadurch gekennzeichnet, dass** die Turbogeneratorvorrichtung in das Grundwasser selbst eingetaucht ist, wobei die zumindest eine hydraulische Turbine (2) mit zumindest einem untertauchbaren Asynchronmotor (3) gekoppelt ist, und wobei die Turbogeneratorvorrichtung zusätzlich zumindest eine zylindrische Kammer (4) umfasst, die das zumindest eine zylindrische Rohr (1) umhüllt, wobei die zumindest eine zylindrische Kammer (4) eine Mehrzahl von Öffnungen (5) umfasst, durch die das Grundwasserfluid zirkuliert.

2. Turbogeneratorvorrichtung nach dem vorhergehenden Anspruch, **dadurch gekennzeichnet, dass**
das zumindest eine Ventil (6) pneumatisch ist und
ein aufblasbares/ablassbares Gasvolumen (7) umfasst, das mit zumindest einem Rohr (8) gekoppelt ist, wobei:
das Betriebsmittel zumindest einen Gastank, der mit dem Rohr (8) gekoppelt ist, umfasst, und wobei das Betriebsmittel außerhalb in Bezug auf die Vorrichtung angeordnet ist, ohne signifikante Ladungsverluste beim Betrieb des zumindest einen Ventils (6) zu erzeugen.

3. Turbogeneratorvorrichtung nach einem der vorhergehenden Ansprüche, **dadurch gekennzeichnet, dass** der Durchmesser des zumindest einen zylindrischen Rohres (1) zwischen 200 und 600 mm umfasst.

4. Turbogeneratorvorrichtung nach einem der vorhergehenden Ansprüche, **dadurch gekennzeichnet, dass** der zumindest eine Asynchronmotor (3) außen eine Mehrzahl von Kühlrippen umfasst.

5. Turbogeneratorvorrichtung nach Anspruch 2, **dadurch gekennzeichnet, dass** die Turbogeneratorvorrichtung zum Anreichern und Entziehen von Fluid von Grundwasser umkehrbar ist, so dass Gas durch ein Regulieren des Betriebsmittels eingeführt oder entzogen werden kann.

6. Prozess zum Erzeugen von Energie in einer Grundwasseranreicherung, **dadurch gekennzeichnet, dass** er zumindest eine Turbogeneratorvorrichtung umfasst, die zumindest ein zylindrisches Rohr (1) umfasst, das an seinen Enden intern offen ist, umfassend:
zumindest eine hydraulische Turbine (2), die mit zumindest einem untertauchbaren Asynchronmotor (1) gekoppelt ist,
zumindest ein Ventil (6), das mit einem der Enden des zumindest einen zylindrischen Rohres (1) gekoppelt ist und ein externes Betriebsmittel außerhalb des zumindest einen zylindrischen Rohres (1) umfasst,
und dass der Prozess ermöglicht:
a) die Strömung eines Fluides in das Grundwasser mittels eines Betriebs des Betriebsmittels, das dem zumindest einen Ventil (6) zugeordnet ist, wobei die Fluidströmung elektrische Energie aufgrund der Bewegung der zumindest einen hydraulischen Turbine (2), die mit dem zumindest einen Asynchronmotor (3) gekoppelt ist, erzeugt,
b) die Fluidströmung in das zumindest eine zylindrische Rohr (1), wobei die Fluidströmung in das Grundwasser mittels eines Blockierens des externen Betriebsmittels, das mit dem zumindest einen Ventil (6) gekoppelt ist, verhindert, und
c) den Fluidabfluss des Grundwassers mittels eines
Betriebs des Betriebsmittels, das dem zumindest einen Ventil (6) zugeordnet ist, wobei der Einlass von Fluid in die zumindest eine Turbogeneratorvorrichtung zugelassen wird, und
dass der zumindest eine Asynchronmotor (3), der mit der zumindest einen Hydraulikturbine (2) gekoppelt ist, betrieben wird und als eine Fluidantriebspumpe wirkt.

7. Prozess zum Erzeugen von Energie in einer Grundwasseranreicherung nach Anspruch 6, **dadurch gekennzeichnet, dass** in dem Fall, dass eine Entnahme von Fluid von dem Grundwasser selbst erforderlich ist, der zumindest eine untertauchbare Asynchronmotor (3) elektrische Energie an die zumindest eine hydraulische Turbine (2) liefert, so dass sie sich wie eine Fluidantriebspumpe verhält.

## Revendications

1. Dispositif turbogénérateur pour générer de l'énergie dans une alimentation de formation aquifère comprenant au moins un tube cylindrique (1) ouvert de façon interne à ses extrémités comportant :
au moins une turbine hydraulique (2),
au moins une vanne (6) qui est accouplée à l'une des extrémités dudit au moins un tube cylindrique (1) et qui permet d'ouvrir/fermer le flux de fluide à travers ledit au moins un tube cylindrique (1) :
dans lequel ladite au moins une vanne (6) peut être mise en oeuvre par un utilisateur par des moyens de mise en oeuvre qui peuvent être commandés de l'extérieur par rapport à l'emplacement du dit dispositif, **caractérisé en ce que** le dispositif turbogénérateur est immergé dans l'aquifère lui-même, dans lequel la au moins une turbine hydraulique (2) est accouplée à au moins un moteur asynchrone immergeable (3), et dans lequel ledit dispositif turbogénérateur comporte en plus au moins une chambre cylindrique (4) qui enveloppe au moins un tube cylindrique (1), ladite au moins une chambre cylindrique (4) comportant une pluralité d'ouvertures (5) à travers lesquelles le fluide de formation aquifère circule.

2. Dispositif turbogénérateur selon la revendication précédente **caractérisé en ce que** ladite au moins une vanne (6) est pneumatique et comporte un volume gazeux (7) pouvant être gonflé ou dégonflé connecté à au moins un tube (8) et dans lequel lesdits moyens de mise en oeuvre comportent au moins un réservoir de gaz connecté audit tube (8) et dans lequel lesdits moyens de mise en oeuvre sont disposés en dehors dudit dispositif sans que cela produise une perte de charge significative lorsque ladite au moins une vanne (6) est mise en oeuvre.

3. Dispositif turbogénérateur selon l'une quelconque des revendications précédentes **caractérisé en ce que** le diamètre de l'un au moins tube cylindrique susdit (1) est compris entre 200 et 600 mm.

4. Dispositif turbogénérateur selon l'une quelconque des revendications précédentes **caractérisé en ce que** au moins un moteur asynchrone (3) comporte extérieurement une pluralité d'ailettes de refroidissement.

5. Dispositif turbogénérateur selon la revendication 2 **caractérisé en ce que** ledit dispositif turbogénérateur est réversible de façon à pouvoir recharger ou extraire du fluide aquifère et tel que du gaz puisse être introduit ou extrait pour réguler les moyens de mise en oeuvre.

6. Procédé pour produire de l'énergie dans une alimentation de formation aquifère **caractérisé en ce qu'**il nécessite au moins un dispositif turbogénérateur comportant au moins un tube cylindrique (1) ouvert de façon interne à ses extrémités comprenant au moins une turbine hydraulique (2) accouplée à au moins un moteur asynchrone immergeable (3), au moins une vanne (6) accouplée à l'une des extrémités dudit au moins un tube cylindrique (1) et comportant des moyens de mise en oeuvre disposés à l'extérieur dudit au moins un tube cylindrique (1) et **en ce que** le procédé permet :
a) le flux d'un fluide dans l'aquifère par le moyen desdits moyens de mise en oeuvre associés à la susdite au moins une vanne (6), dans lequel ledit flux de fluide génère de l'énergie électrique due au mouvement d'au moins une susdite turbine hydraulique (2) accouplée à au moins un susdit moteur asynchrone (3),
b) le flux de fluide dans au moins un tube cylindrique (1) susdit empêchant le flux de fluide dans l'aquifère en bloquant lesdits moyens de mise en oeuvre disposés à l'extérieur accouplés à ladite au moins une vanne (6) et
c) le flux de fluide hors de l'aquifère au moyen des moyens de mise en oeuvre associés à au moins une susdite vanne (6), permettant l'entrée du fluide dans au moins un dispositif turbogénérateur et la mise en oeuvre d'au moins un moteur asynchrone (3) accouplé à au moins une susdite turbine hydraulique (2) et agissant comme une pompe de fluide.

7. Procédé pour produire de l'énergie dans une alimentation de formation aquifère selon la revendication 6 **caractérisé en ce que** dans le cas nécessitant une extraction de fluide de l'aquifère lui-même ledit au moins un moteur asynchrone immergeable (3) fournit de l'énergie électrique à ladite au moins une turbine hydraulique (2) de telle façon qu'il agit comme une pompe de fluide
